# EUROPEAN PATENT APPLICATION

(11) **EP 3 098 876 A1**
(43) Date of publication of application: **30.11.2016**
(21) Application number: 15855499.8
(22) Date of filing: 28.10.2015
(51) Int. Cl.: H01M 2/02

(54) **OUTER PACKAGE MATERIAL FOR POWER STORAGE DEVICE**

(30) Priority: 31.10.2014 JP 2014223186; 07.01.2015 JP 2015001447
(71) Applicant: Toppan Printing Co., Ltd., Tokyo 110-0016 (JP)
(72) Inventor: MAEDA, Hideyuki, Tokyo 110-0016 (JP); TANIGUCHI, Tomoaki, Tokyo 110-0016 (JP)
(74) Representative: Hoffmann Eitle
(86) International application number: PCT/JP2015/080422
(87) International publication number: WO 2016/068201

(57) **Abstract**

The present invention relates to a packaging material for a power storage material provided with a metal foil layer, a coating layer directly formed on a first surface of the metal foil layer or with a first corrosion prevention treatment layer interposed therebetween, a second corrosion prevention treatment layer formed on a second surface of the metal foil layer, an adhesive layer formed on the second corrosion prevention treatment layer, and a sealant layer formed on the adhesive layer. In the packaging material, the coating layer is formed from an active energy ray-curable resin composition that contains a urethane (meth)acrylate or an aqueous polyurethane dispersion, and the urethane (meth)acrylate is obtained through reaction between a polyol having an alicyclic structure, a polyisocyanate, and a hydroxyl group-containing (meth)acrylate.

## Description

### [Technical Field]

The present invention relates to a packaging material for a power storage device.

### [Background Art]

Secondary batteries such as lithium ion secondary batteries, nickel hydride and lead storage batteries, and electrochemical capacitors such as electric double layer capacitors are known as power storage devices. The further downsizing of power storage devices, however, is sought due to the downsizing of mobile devices, limitations of installation space, etc., and accordingly, attention is being paid to lithium-ion secondary batteries having high energy density. As a packaging material which can be used in a lithium ion secondary battery, although a metallic can has been widely used conventionally, recently, a multilayer film has been used that is light, has high radiation performance and can be applied at low cost.

An electrolytic solution of a lithium ion secondary battery is formed of an aprotic solvent such as propylene carbonate, ethylene carbonate, dimethyl carbonate, diethyl carbonate or ethylmethyl carbonate and an electrolyte. Lithium salts such as LiPF₆ and LiBF₄ may be used as the electrolyte. However, these lithium salts generate hydrofluoric acid due to a hydrolysis reaction. Hydrofluoric acid causes corrosion on the metallic surfaces of battery members, or, a decrease of the laminate bond strength between layers of the multilayer film which is the packaging material.

Accordingly, the aforementioned packaging material is provided with an aluminum foil, etc., as a barrier layer on the inside of the multilayer film, in order to prevent water from entering through the surface of the multilayer film. For example, as the aforementioned packaging material, there are known a multilayer film wherein a base layer having heat resistance, a first adhesive layer, a barrier layer, a corrosion prevention treatment layer which prevents corrosion due to hydrofluoric acid, a second adhesive layer, and a sealant layer are layered in this order. A lithium ion secondary battery which uses the packaging material including an aluminum foil as a barrier layer is referred to as an aluminum laminate type lithium ion secondary battery.

The aluminum laminate type lithium ion secondary battery is obtained by, for example, forming a recess formed on a part of the packaging material by cold forming, accommodating battery elements such as a positive electrode, a separator, a negative electrode, and an electrolytic solution in the recess, folding the remaining portions of the packaging material and sealing the edge portions by heat-sealing. Such a lithium ion secondary battery is referred to as an embossed type lithium ion secondary battery. Recently, for the purpose of increasing the energy density, embossed type lithium-ion secondary batteries where recesses are formed on both sides of the packaging materials to be bonded together have been produced. This type of lithium-ion secondary batteries can accommodate more battery elements.

The energy density of the lithium-ion secondary battery increases as the depth of the recess formed by cold forming increases. However, pinholes or breakage readily occurs during forming of the packaging material as the formed recess becomes deeper. Accordingly, a stretched film has been used for the base layer of such packaging materials to protect the metal foil. (for example, refer to PTL 1).

### [Citation List]

### [Patent Literature]

PTL 1: JP-B-3567230

### [Summary of Invention]

### [Technical Problem]

PTL 1 uses a stretched polyamide film or a stretched polyester film having a tensile strength and an elongation amount set to a prescribed value or more as the base layer in order to improve formability. However, when a stretched polyamide film is used as the base layer, there is a problem that the stretched polyamide film melts when the electrolyte adheres to the stretched polyamide film during the electrolyte injection step, etc. Further, polyamide is a hygroscopic resin, thus, there are concerns that the water absorbed into the polyamide film decreases the insulating properties between the exterior and the aluminum foil which is the barrier layer when humidity is high. Further, while the problems of the polyamide film are not likely to occur by using a stretched polyester film as the base layer, there is a tendency that the formability is not necessarily sufficient. Further, an adhesive layer is needed to be provided when adhering a stretched film to a barrier layer, thus, there are limits to the reduction in cost and the reduction in thickness.

Taking the aforementioned circumstances into consideration, it is an object of the present invention to provide a packaging material for a power storage device which is not altered if the electrolytic solution is adhered to the exterior, can maintain good insulating properties under high humidity conditions, and has good formability.

### [Solution to Problem]

The present invention provides a packaging material for a power storage device including a metal foil layer; a coating layer directly formed on a first surface of the metal foil layer or with a first corrosion prevention treatment layer interposed therebetween; a second corrosion prevention treatment layer formed on a second surface of the metal foil layer, the second surface being opposite to the first surface; an adhesive layer formed on the second corrosion prevention treatment layer; and a sealant layer formed on the adhesive layer. In the packaging material, the coating layer is formed from an active energy ray-curable resin composition containing a urethane (meth)acrylate, or from an aqueous polyurethane dispersion; and the urethane (meth)acrylate is obtained through reaction between a polyol having an alicyclic structure, polyisocyanate, and a hydroxyl group-containing (meth)acrylate.

The packaging material having the above configuration has good electrolytic resistance, and insulating properties and formability under high humidity conditions.

In the packaging material, the urethane (meth)acrylate preferably has 2 to 6 (meth)acryloyl groups.

In the packaging material, the coating layer preferably has a thickness of 3 µm or more to 30 µm or less.

In the packaging material, the polyol having an alicyclic structure preferably contains a polycarbonate diol having an alicyclic structure. Water resistance is likely to be further improved by the polyol having an alicyclic structure that contains the polycarbonate diol.

It is preferable that the polycarbonate diol has an alicyclic structure has a structure derived from at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol, and 1,4-cyclohexanediol. Water resistance and electrolytic resistance are likely to be further improved by the polycarbonate diol having an alicyclic structure that has the above structure.

In the packaging material, it is preferable that the polyol having an alicyclic structure contains at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol, and 1,4-cyclohexanediol. Water resistance and electrolytic resistance are likely to be further improved by the polyol having an alicyclic structure that contains the above compound.

### [Advantageous Effects of the Invention]

The present invention can provide a packaging material for a power storage device, which is not altered if an electrolytic solution is adhered to the exterior, ensures good insulating properties under high humidity conditions, and has good formability. Further, in the conventional method which uses a stretched film, it has been necessary to provide an adhesive layer between a stretched film and a barrier layer, but such an adhesive layer is not necessarily needed in the present invention, thus, reduction in cost and reduction in thickness can be realized.

### [Brief Description of the Drawings]

Fig. 1 is a schematic cross sectional view of a packaging material for a power storage device according to an embodiment of the present application.
Fig. 2 is a schematic cross sectional view of a packaging material for a power storage device according to another embodiment of the present invention.

### [Description of the Embodiments]

Some embodiments of the present invention will be described below. It should be noted that the present invention should not be construed as being limited to the following embodiments.

### [Packaging material]

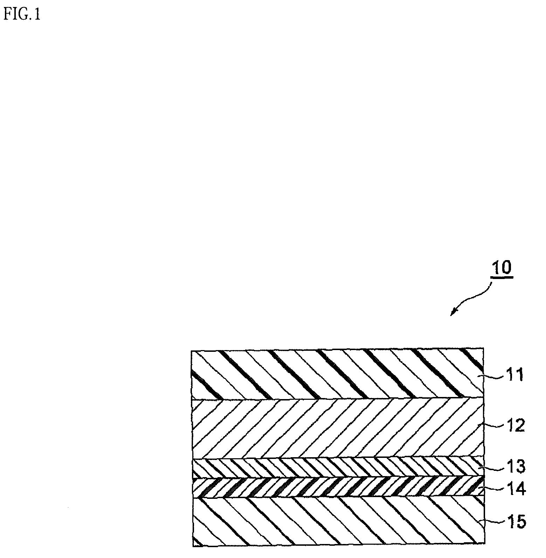

A packaging material for a power storage device according to an embodiment of the present application will be explained. Fig. 1 is a schematic cross sectional view showing the packaging material for a power storage device (hereinafter, referred to simply as the "packaging material 10") according to an embodiment of the present application. The packaging material 10 includes, as shown in Fig. 1, a metal foil layer 12 which exhibits a barrier function, a coating layer 11 formed on a first surface of the metal foil layer 12, a corrosion prevention treatment layer 13 formed on a second surface of the metal foil layer 12, the second surface being opposite to the first surface, and an adhesive layer 14 and a sealant layer 15 layered in this order on the corrosion prevention treatment layer 13. When using the packaging material 10 to form the power storage device, the coating layer 11 is the outermost layer, and the sealant layer 15 is the innermost layer. Each layer for forming the packaging material 10 will be described in detail below.

### (Coating layer)

The coating layer 11 serves to impart heat resistance to the packaging material, when performing heat-sealing during preparation of the power storage device, and electrolytic resistance which is not altered if in contact with the electrolyte, and inhibits generation of pinholes that may occur during processing or distribution.

The coating layer 11 is formed from an active energy ray-curable resin composition, and is directly formed on the first surface of the metal foil layer 12 without an adhesive layer or the like being interposed therebetween. Such a coating layer 11 may be formed by a method of coating an active energy ray-curable resin composition for making a coating layer onto a metal foil layer and irradiating an active energy ray, or a method of coating an aqueous polyurethane dispersion onto a metal foil layer and heating and drying the solvent, or the like.

The active energy ray-curable resin composition contains urethane (meth)acrylate. It is preferable that the urethane (meth)acrylate has 2 or more to 6 or less (meth)acryloyl groups. If there are 2 or more (meth)acryloyl groups in the urethane (meth)acrylate, a cured product is likely to have a sufficient degree of polymerization due to the active energy ray irradiation. Further, if there are 6 or less (meth)acryloyl groups in the urethane (meth)acrylate, better insulating properties are likely to be exerted under high humidity conditions. As a method of measuring the number of acryloyl functional groups, any common method of measuring the equivalent weight of carbon-carbon double bond functional groups can be used. As an example, an iodine value method (Japanese Pharmacopoeia, Fourteenth Edition, General Tests, 65. Fats and Fatty Oils Test) is used. Urethane (meth)acrylate mentioned above is obtained by reaction of a polyol having an alicyclic structure, polyisocyanate, and a hydroxyl group-containing (meth)acrylate, and is preferably obtained by reaction of the hydroxyl group-containing (meth)acrylate with a reaction product obtained by reacting a polyol having an alicyclic structure with a polyisocyanate. A polyol having an alicyclic structure imparts flexibility to a cured product which is obtained by irradiating UV rays to a coating film of the active energy ray-curable resin composition. Therefore, the forming processability of the packaging material can be improved by using the active energy ray-curable resin composition. Further, the alicyclic structure is less hydrophillic and has bulky properties. With a polyol having such an alicyclic structure, permeation of water from the exterior can be prevented and a coating layer having a good water resistance can be obtained. Therefore, the packaging material obtained using polyol having an alicyclic structure has good insulating properties.

Polyols having the alicyclic structure include, for example, diol monomers such as bicyclo [5,3,0]decane dimethanol, bicyclo [4,4,0] decane dimethanol, bicyclo[4,3,0]nonane dimethanol, norbornane dimethanol, tricyclodecane dimethanol, pentacyclopentadecane dimethanol, 1,3-adamantane diol, isosorbide, 2,6-decahydronaphthalene dimethanol, hydrogenated bisphenol A, 1,4-cyclohexane dimethanol, 1,4-cyclohexanediol, 1,3-cyclohexane dimethanol, 1,3-cyclohexanediol, 1,2-cyclohexane dimethanol, and 1,2-cyclohexanediol. It is preferable that a polyol having the alicyclic structure contains at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol and 1,4-cyclohexanediol. Much better water resistance or electrolytic resistance is likely to be obtained by the polyol having the alicyclic structure containing the aforementioned compounds.

Further, polyols having an alicyclic structure may contain a reaction product obtained by reacting a polyol monomer having the alicyclic structure and a lactone. Usable lactones include β-propiolactone, ε-caprolactone, δ-valerolactone, β-methyl-δvalerolactone, α,β,γ-trimethoxy-δ-valerolactone, β-methyl-ε-isopropyl-ε-caprolactone, lactide, and glycolide.

Polyols having the alicyclic structure may contain a polycarbonate diol having the alicyclic structure. Water resistance is likely to be further improved by a polyol having the alicyclic structure containing a polycarbonate diol having the alicyclic structure.

Polycarbonate diols having the alicyclic structure have, for example, a structure derived from a diol monomer. Diol monomers that can be used include bicyclo[5,3,0]decane dimethanol, bicyclo [4,4,0] decane dimethanol, bicyclo[4,3,0]nonane dimethanol, norbornane dimethanol, tricyclodecane dimethanol, pentacyclopentadecane dimethanol, 1,3-adamantane diol, isosorbide, 2,6-decahydronaphthalene dimethanol, hydrogenated bisphenol A, 1,4-cyclohexane dimethanol, 1,4-cyclohexanediol, 1,3-cyclohexane dimethanol, 1,3-cyclohexanediol, 1,2-cyclohexane dimethanol, 1,2-cyclohexanediol, and the like. A polycarbonate diol having the alicyclic structure preferably has a structure derived from at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol and 1,4-cyclohexanediol. Much better water resistance or electrolytic resistance is likely to be obtained by a polycarbonate diol having the alicyclic structure having a structure derived from the aforementioned compounds.

Further, the polycarbonate diol having the alicyclic structure may include a structure derived from a reaction product obtained by reacting a diol monomer having the alicyclic structure and a lactone. Usable lactones include the compounds as mentioned above. Polyols having the alicyclic structure may be used singly or in combination of two or more.

Polyisocyanates are compounds having two or more isocyanate groups. Polyisocyanates that can be used include, for example, tolylene diisocyanate, diphenylmethane diisocyanate, hydrogenated diphenylmethane diisocyanate, hexamethylene diisocyanate, isophorone diisocyanate, xylylene diisocyanate, hydrogenated xylylene diisocyanate, tetramethylxylylene diisocyanate, trimethylhexamethylene diisocyanate, 1,5-naphthalene diisocyanate, norbornane diisocyanate, tolidine diisocyanate, p-phenylene diisocyanate, and lysine diisocyanate.

Further, hydroxyl group-containing (meth)acrylates are compounds having one or more hydroxyl groups, and having one or more acryloyloxy groups or methacryloyloxy groups. A hydroxyl group in a hydroxyl group-containing (meth)acrylate can react with an isocyanate group. A hydroxyl group-containing (meth)acrylate can be attached to, for example, an isocyanate group of the reaction products obtained by reacting a polyol having an alicyclic structure and a polyisocyanate. Usable hydroxyl group-containing (meth)acrylates include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 4-hydroxybutyl (meth)acrylate, neopentyl glycol mono (meth)acrylate, trimethylolpropane tri(meth)acrylate, pentaerythritol tri (meth)acrylate, dipentaerythritol tetra (meth)acrylate, and the like.

When preparing urethane (meth)acrylate, the amount of a polyol having an alicyclic structure to be blended is preferably in the range of 30 to 200 equivalents and more preferably in the range of 40 to 100 equivalents per 100 polyisocyanate equivalents. Further, the amount of a hydroxyl group-containing (meth)acrylate to be blended is preferably in the range of 0.5 to 5 mol, and more preferably in the range of 1.5 to 3 mol per 1 mol of a reaction product obtained by reacting a polyol having an alicyclic structure and a polyisocyanate. The molecular weight of the obtained urethane (meth)acrylate is preferably in the range of 500 to 20000, and more preferably in the range of 500 to 5000.

The active energy ray-curable resin composition may further contain a resin different from urethane (meth)acrylate, a (meth)acrylate monomer, a photopolymerization initiator, a silane coupling agent, and the like.

As the resin different from urethane (meth)acrylate, polyvinyl chloride, an imide resin, polyester, a fluororesin, an acrylic resin, and the like can be used, and thereamong, an acrylic resin is preferably used. Electrolytic resistance is likely to be further improved and the good insulating properties are likely to be further maintained under high humidity conditions by the active energy ray-curable resin composition containing an acrylic resin.

Further, the photopolymerization initiator has an effect of initiating polymerization of urethane (meth)acrylate with a (meth)acrylate monomer by irradiation of an active energy ray. Photopolymerization initiators that can be used include: benzophenone derivatives such as 4-dimethylaminobenzoic acid, 4-dimethylaminobenzoic acid ester, 2,2-dimethoxy-2-phenylacetophenone, acetophenone diethyl ketal, alkoxyacetophenone, benzyl dimethyl ketal, benzophenone, and 3,3-dimethyl-4-methoxybenzophenone, 4,4-dimethoxybenzophenone, and 4,4-diaminobenzophenone; benzyl derivatives such as alkyl benzoylbenzoate, bis-(4-dialkylaminophenyl)ketone, benzyl, and benzylmethyl ketal; benzoin derivatives such as benzoin and benzoin isobutyl ether; and benzoin isopropyl ether, 2-hydroxy-2-methylpropiophenone, 1-hydroxycyclohexyl phenyl ketone, xanthone, thioxanthone, thioxanthone derivatives, fluorene, 2,4,6-trimethylbenzoyl diphenylphosphine oxide, bis-(2,6-dimethoxybenzoyl)-2,4,4-trimethylpentyl phosphine oxide, bis-(2,4,6-trimethylbenzoyl)-phenyl phosphine oxide, 2-methyl-1-[4-(methylthio)phenyl]-2-morpholinopropane-1,2-benzyl-2-dimethylamino-1-(morpholinophenyl)-butanone-1, and the like.

The silane coupling agent is a silane compound having an organic functional group and a hydrolyzable group. The interfacial bond strength between the coating layer 11 and the metal foil layer 12 can be further improved by the active energy ray-curable resin composition containing a silane coupling agent. The silane coupling agent is not specifically limited, so long as it improves the adhesiveness of the coating layer 11 with the metal foil layer 12. Usable silane coupling agents include organic functional group-containing silane coupling agents such as a vinyl group-containing silane coupling agent, an epoxy group-containing silane coupling agent, a styryl group-containing silane coupling agent, a methacryl group-containing silane coupling agent, an acryloyl group-containing silane coupling agent, an amino group-containing silane coupling agent, a ureido group-containing silane coupling agent, a mercapto group-containing silane coupling agent, a sulfide group-containing silane coupling agent, an isocyanate group-containing silane coupling agent, and an allyl group-containing silane coupling agent. The silane coupling agent is preferably a methacryl group-containing silane coupling agent or an acryloyl group-containing silane coupling agent, from the viewpoint of improving adhesiveness.

The hydrolyzable group in the silane coupling agent includes, for example, an alkoxy group having 1 to 6 carbon atoms, such as a methoxy group, an ethoxy group or the like, an acetoxy group, and a 2-methoxyethoxy group.

As the methacryl group-containing silane coupling agent, 3-methacryloxypropyl methyl dimethoxysilane, 3-methacryloxypropyl trimethoxy silane, 3-methacryloxypropyl methyl diethoxysilane, and 3-methacryloxypropyl triethoxy silane, or the like can be used, for example. As the acryloyl group-containing silane coupling agent, 3-acryloxypropyltrimethoxysilane, or the like can be used, for example.

When the active energy ray-curable resin composition contains a resin other than urethane (meth)acrylate, a (meth)acrylate monomer, a photopolymerization initiator, or a silane coupling agent, preferable contents are as follows. The content of the resin different from the urethane (meth)acrylate is preferably in the range of 5 to 50 mass% based on the total amount of the active energy ray-curable resin composition. The content of the (meth)acrylate monomer is preferably in the range of 50 to 98 mass% based on the total amount of the active energy ray-curable resin composition. The content of the photopolymerization initiator is preferably in the range of 1 to 10 mass% based on the total amount of the urethane (meth)acrylate. The content of the silane coupling agent is preferably 0.5 to 10 mass% based on the total amount of the active energy ray-curable resin composition.

As the aqueous polyurethane dispersion can be set to a high molecular weight in advance, a tough coating film is easily obtained. Polyurethane contained in the aqueous polyurethane dispersion is obtained by, for example, reaction of a polyol having an alicyclic structure with a polyisocyanate. As the polyol having an alicyclic structure, mention can be made of, for example, a diol monomer such as bicyclo[5,3,0]decane dimethanol, bicyclo [4.4,0] decane dimethanol, bicyclo[4,3,0]nonane dimethanol, norbornane dimethanol, tricyclodecane dimethanol, pentacyclopentadecane dimethanol, 1,3-adamantane diol, isosorbide, 2,6-decahydronaphthalene dimethanol, hydrogenated bisphenol A, 1,4-cyclohexane dimethanol, 1,4-cyclohexanediol, 1,3-cyclohexane dimethanol, 1,3-cyclohexanediol, 1,2-cyclohexane dimethanol, 1,2-cyclohexanediol, or the like. The polyisocyanate is a compound having two or more isocyanate groups. As the polyisocyanate, mention can be made of, for example, tolylene diisocyanate, diphenylmethane diisocyanate, hydrogenated diphenylmethane diisocyanate, hexamethylene diisocyanate, isophorone diisocyanate, xylylene diisocyanate, hydrogenated xylylene diisocyanate, tetramethylxylylene diisocyanate, trimethylhexamethylene diisocyanate, 1,5-naphthalene diisocyanate, norbornane diisocyanate, tolidine diisocyanate, p-phenylene diisocyanate, lysine diisocyanate, or the like.

The thickness of the coating layer 11 is preferably in the range of 3 to 30 µm, and more preferably in the range of 5 to 20 µm. The coating layer 11 is directly formed on the metal foil layer 12, and an adhesive layer is not needed to be interposed between the coating layer 11 and the metal foil layer 12. Therefore, the cost that would be incurred in providing the adhesive layer can be reduced. Further, with the thickness of the coating layer 11 being 20 µm or less, the packaging material can be easily made thinner than the conventional packaging material.

Usable active energy rays to be irradiated to the coating layer 11 include UV rays emitted from a light source such as a xenon lamp, a low pressure mercury lamp, a high pressure mercury lamp, an ultrahigh pressure mercury lamp, a metal halide lamp, carbon arc lamp, and a tungsten lamp, and, electron beams, α-rays, β-rays, and γ-rays ordinarily produced from a 20 to 2000kV particle accelerator.

The irradiation conditions of the active energy ray are not specifically limited, and can be suitably set in accordance with the requirements, but the conditions are preferably set so that the integrated light quantity is normally 100 mJ/cm² or more, and preferably 300 mJ/cm² or more.

### (Metal foil layer)

As the metal foil layer 12, various metal foils such as of aluminum, stainless steel, copper, nickel, etc., can be used. Of these metal foils, an aluminum foil is preferable from the viewpoints of moisture-proof properties, and processability such as ductility, and cost. From the viewpoint of rigidity, a copper foil or a nickel foil is preferable. As the aluminum foil, ordinary soft aluminum foils can be used. Thereamong, an aluminum foil containing iron is preferably used from the viewpoints of having good pinhole resistance and ductility during formation.

The iron content in the aluminum foil (100 mass %) containing iron is preferably in the range of 0.1 to 9.0 mass%, and more preferably in the range of 0.5 to 2.0 mass%. If the iron content is 0.1 mass% or more, the packaging material 10 is likely to have good pinhole resistance and ductility. If the iron content is 9.0 mass% or less, the packaging material 10 is likely to have good flexibility.

The thickness of the metal foil layer 12 is preferably in the range of 9 to 200 µm, and more preferably in the range of 15 to 100 µm from the viewpoints such as of barrier properties, pinhole resistance, and processability.

### (Corrosion prevention treatment layer)

The corrosion prevention treatment layer 13 serves to inhibit corrosion of the metal foil 12 due to the electrolytic solution, or hydrofluoric acid which is generated by the reaction between the electrolytic solution and water.

The corrosion prevention treatment layer 13 is preferably formed from a coating type or an immersion type acid-resistant corrosion prevention treatment agent. This kind of corrosion prevention treatment layer has good corrosion prevention effect against acids of the metal foil layer 12.

Corrosion prevention treatment agents that can be used include, for example, corrosion prevention treatment agents for use in ceria sol treatment, composed of cerium oxide, phosphoric acid and various thermosetting resins, corrosion prevention treatment agents for use in chromate treatment, composed of chromate, phosphate, fluoride and various thermosetting resins, and the like.

The corrosion prevention treatment layer 13 is not limited to the those mentioned above, as long as sufficient corrosion resistance can be imparted to the metal foil layer 12. The corrosion prevention treatment layer 13 may be formed, for example, by phosphate treatment, boehmite treatment, or the like.

The corrosion prevention treatment layer 13 may be formed of a single layer, or may be formed of a plurality of layers. Further, the corrosion prevention treatment layer 13 may contain additives such as a silane-based coupling agent.

The thickness of the corrosion prevention treatment layer 13 is preferably in the range of 10 nm to 5 µm, and more preferably in the range of 20 to 500 nm in view of the corrosion protective function and the function as an anchor.

### (Adhesive layer)

The adhesive layer 14 serves to bond the metal foil layer 12 on which the corrosion prevention treatment layer 13 is formed to the sealant layer 15. The packaging material 10 is broadly categorized into thermal lamination configurations and dry lamination configurations according to the adhesive component forming the adhesive layer 14.

As the adhesive component (adhesive resin) forming the adhesive layer 14 in the thermal lamination configuration, an acid-modified polyolefin resin made by graft-modifying a polyolefin-based resin with acid, such as maleic anhydride, is preferable. Because a polar group is introduced to a part of the non-polar polyolefin resin, the acid-modified polyolefin resin can adhere tightly to both of the sealant layer 15 and the corrosion prevention treatment layer 13, for example, when a non-polar layer formed with a polyolefin resin film, etc., is used as the sealant layer 16 and a polar layer is used as the corrosion prevention treatment layer 13. Further, use of the acid-modified polyolefin resin improves the resistance against the contents such as electrolyte, and if hydrofluoric acid is generated inside the battery, the adhesive forces are easily prevented from being reduced due to deterioration of the adhesive layer 14.

Acid-modified polyolefin resins used in the adhesive layer 14 may be used singly, or in combinations of two or more.

Examples of the polyolefin resin used in the acid-modified polyolefin resin include: low-density, medium-density, or high-density polyethylene; an ethylene-α olefin copolymer; polypropylene; a block or random copolymer that contains polypropylene as a copolymerization component; a propylene-α olefin copolymer; and the like. Further, a copolymer obtained by copolymerizing polar molecules such as of acrylic acid or methacrylic acid with the above-described materials; a polymer such as a cross-linked polyolefin; and the like can also be used.

As the acid for modifying the polyolefin resin, carboxylic acid, epoxy compounds, acid anhydride, etc., may be used, and maleic anhydride is preferable.

In the case of the thermal lamination configuration, the adhesive layer 14 can be formed by extruding the adhesive component by an extruder.

Usable adhesive components of the adhesive layer 14 in the dry-lamination configuration include, for example, two-liquid curing type polyurethane adhesives in which a main resin such as polyester polyol, polyether polyol, and acrylic polyol reacts with an aromatic or aliphatic isocyanate compound having two or more functional groups as the curing agent.

However, when using such a two-liquid curing type polyurethane adhesive, because the adhesive layer 14 often has a coupling portion having a high hydrolyzability such as an ester group or a urethane group, using the adhesive layer 14 having the thermal lamination configuration is preferable for uses demanding higher reliability.

The adhesive layer 14 having the dry lamination configuration can be formed after coating the adhesive component onto the corrosion prevention treatment layer 13, followed by drying. If the polyurethane adhesive is used, it is subjected to aging, for example, at 40°C for 4 or more days after coating to promote the reaction of the hydroxyl group of the main resin with the isocyanate group of the curing agent, and to enable strong adhesion.

The thickness of the adhesive layer 14 is preferably in the range of 2 to 50 µm, and more preferably in the range of 3 to 20 µm, from the viewpoints of adhesiveness, conformability, processability, and the like.

### (Sealant layer)

The sealant layer 15 provides sealing properties to the packaging material 10 by heat-sealing. As the sealant layer 15, a resin film made of a polyolefin resin, or a resin film made of an acid-modified polyolefin resin which is obtained by graft-modifying a polyolefin resin using an acid such as maleic anhydride can be used.

Examples of the polyolefin resin include: low-density, medium-density, or high-density polyethylene; an ethylene-α olefin copolymer; polypropylene; a block or random copolymer that contains polypropylene as a copolymerization component; a propylene-α olefin copolymer; and the like. These polyolefin-based resins may be used singly, or in combination of two or more.

Examples of the acid-modified polyolefin resin include the same resins as those mentioned in describing the adhesive layer 14.

The sealant layer 15 may be a single-layer film or a multilayer film, and may be selected in accordance with the function that is required. For example, in view of imparting moisture-proof properties, a multilayer film in which a resin such as ethylene-cyclic olefin copolymer or polymethylpentene is interposed can be used.

Further, the sealant layer 15 may be formulated with various additives such as a flame retardant, a slip agent, an anti-blocking agent, an oxidation inhibitor, a photostabilizer, and a tackifier. It is preferable that the thickness of the sealant layer 15 is in the range of 10 to 100 µm, and more preferably in the range of 20 to 60 µm from the viewpoint of preserving insulating properties.

The sealant layer 15 of the packaging material 10 may be layered by dry lamination, but in view of improving the adhesion properties, for example, the sealant layer 15 may be layered by sandwich-lamination which uses an acid-modified polyolefin resin as the adhesive layer 14, or alternatively, the adhesive layer 14 and the sealant layer 15 may be simultaneously extruded (by a co-extrusion method) and layered. However, in view of having good adhesion properties, the packaging material 10 is preferably made by layering the adhesive layer 14 and the sealant layer 15 by a co-extrusion method.

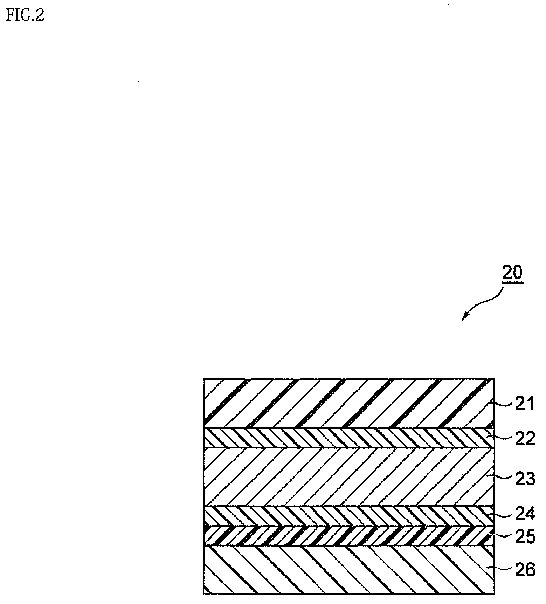

The following description addresses a packaging material 20 for a power storage device (hereinafter, simply referred to as "packaging material 20") according to another embodiment of the present invention. Fig. 2 is a schematic cross sectional view of the packaging material for a power storage device according to another embodiment of the present invention. The packaging material 20 includes, as shown in Fig. 2, a metal foil layer 23 which exhibits a barrier function, a coating layer 21 formed on a first surface of the metal foil layer 23 via a first corrosion prevention treatment layer 22, a second corrosion prevention treatment layer 24 formed on a second surface of the metal foil layer 23, and an adhesive layer 25 and a sealant layer 26 layered sequentially on the second corrosion prevention treatment layer 24. The coating layer 21 may be formed on the first surface of the metal foil layer 23 via only the first corrosion prevention treatment layer 22, or may be formed on the first surface of the metal foil layer 23 via the first corrosion prevention treatment layer 22 and the adhesive layer. When an adhesive layer is not used in the formation of the coating layer 21, the cost for the adhesive can be reduced, and the packaging material can be made thinner. When using an adhesive layer, a two-liquid curing type polyurethane adhesive mentioned regarding the dry lamination configuration of the adhesive layer 14 can be used as an adhesive for constructing the adhesive layer. When using a packaging material 20 to form a power storage device, the coating layer 21 is the outermost layer and the sealant layer 26 is the innermost layer.

The coating layer 21 serves to provide the packaging material with heat resistance in heat-sealing performed during the preparation of the power storage device, electrolytic resistance which is not altered if in contact with the electrolyte, and inhibits generation of pinholes that may occur during processing or distribution. The first corrosion prevention treatment layer 22 serves to inhibit corrosion of the metal foil layer 23 which is caused by hydrofluoric acid that is generated by the electrolytic solution or by reaction between electrolytic solution and water, and, serves to enhance the adhesive force between the metal foil layer 23 and the coating layer 21. The second corrosion prevention treatment layer 24 serves to inhibit corrosion of the metal foil layer 23 which is caused by hydrofluoric acid that is generated by the electrolytic solution or by reaction between electrolytic solution and water. The adhesive layer 25 serves to bond the metal foil layer 23, on which the second corrosion prevention treatment layer 24 is formed, to the sealant layer 26. The sealant layer 26 serves to provide sealing properties to the packaging material 20 by heat-sealing.

The coating layer 21, the metal foil layer 23, the adhesive layer 25 and the sealant layer 26 of the packaging material 20 can have the same configurations as those of the coating layer 11, the metal foil layer 12, the adhesive layer 14 and the sealant layer 15 of the packaging material 10, respectively. Further, the first and second corrosion prevention treatment layers 22 and 24 of the packaging material 20 can have the same configuration as that of the corrosion prevention treatment layer 13 of the packaging material 10.

### [Preparation method of the packaging material]

A preparation method will be explained below, taking the packaging material 10 as an example. The following contents are one example of the preparation method and the preparation method of the packaging material is not limited to the following contents.

As the preparation method of the packaging material 10, the method having the following Steps S1 to S3 can be used, for example.
Step S1: A step of forming the corrosion prevention treatment layer 13 on one surface (second surface) of the metal foil layer 12.
Step S2: A step of coating an active energy ray-curable resin composition onto another surface (first surface opposite to the second surface) of the metal foil layer 12, followed drying and irradiating an active energy ray to form a coating layer 11.
Step S3: A step of bonding a sealant layer 15, via an adhesive layer 14, onto the corrosion prevention treatment layer 13 formed on one surface of the metal foil layer 12.

### (Step S1)

In Step S1, the corrosion prevention treatment layer 13 is formed by coating a corrosion prevention treatment agent on one surface of the metal foil layer 12 and drying. Examples of the corrosion prevention treatment agent include, for example, the corrosion prevention treatment agents for use in ceria sol treatment, and the corrosion prevention treatment agent for use in chromate treatment. The method of coating the corrosion prevention treatment agent is not particularly limited. For example, various methods, such as gravure coating, reverse coating, roll coating, and bar coating, can be used. In the packaging material 20, the first and second corrosion prevention treatment layers are formed on respective surfaces of the metal foil layer 23 in a manner similar to the one stated above. The order of forming the first and the second corrosion prevention treatment layers is not particularly limited.

### (Step S2)

In Step S2, the active energy ray-curable resin composition is coated onto the other surface of the metal foil layer 12 and dried. The method of coating is not particularly limited. For example, various methods, such as gravure coating, reverse coating, roll coating, and bar coating, can be used. After coating, the solvent components are dried, followed by irradiating UV rays having an integrated light quantity of 500 mJ/cm² and a wavelength of 320 nm or less, for example, thereby forming the coating layer 11. In the packaging material 20, the coating layer 21 is formed on the first corrosion prevention treatment layer 22 in a manner similar to the one stated above.

In the case of a generally used packaging material in which a base layer is layered on the exterior of a metal foil layer, because the layers are interposed by an adhesive layer, a step such as aging is necessary. In this regard, formation of the coating layer 11 does not involve interposition of an adhesive layer, thus, a step such as aging is not required in Step S2. As a result, the time taken for preparing one product can be shortened, and the manufacturing efficiency can be improved remarkably. Furthermore, cost can be greatly reduced by not using an adhesive, etc.

In Step S2, a dispersion, that is a dispersion medium such as water in which polymer particles are dispersed, can be coated onto the other surface of the metal foil layer 12 and dried. According to this production method, viscosity of a coating liquid can be kept low if the coating liquid uses a polymer having a high molecular weight. Thus, a polymer having a high molecular weight can be uniformly coated and a tough coating film can be formed. Further, since this production method can dispense with curing with UV rays, the coating layer 11 can be more easily formed.

### (Step S3)

In Step S3, the adhesive layer 14 is formed on a corrosion prevention treatment layer 13, which is in a laminate where the coating layer 11, the metal foil layer 12 and the corrosion prevention treatment layer 13 are sequentially layered, followed by bonding a resin film which forms the sealant layer 15 to the adhesive layer. The layering of the sealant layer 15 is preferably performed by sandwich lamination.

The packaging material 10 can be obtained by the above-explained Steps S1 to S3. The order of steps in the preparation method of the packaging material 10 is not limited to executing Steps S1 to S3 in this order. For example, Step S1 may be performed after performing Step S2.

### [Examples]

The present invention will be specifically described below by way of examples, but the present invention is not limited by the following description.

### [Materials used in preparing packaging material]

Materials used in the metal foil layer, the corrosion prevention treatment layer, the adhesive layer, and the sealant layer of the packaging material of the examples and the comparative examples are shown below.

### (Metal foil layer)

Metal foil: Soft aluminum foil 8079 (manufactured by Toyo Aluminium K.K, thickness: 30 µm).

### (Corrosion prevention treatment layer)

Corrosion prevention treatment agent: Coating type corrosion prevention treatment agent for use in ceria sol treatment mainly containing cerium oxide, phosphate and acrylic resin.

### (Adhesive layer)

Adhesive resin: Polypropylene resin graft-modified with maleic anhydride. (product name "Admer", manufactured by Mitsui Chemicals, Inc).

### (Sealant layer)

Sealant film: Unstretched polypropylene film having a corona-treated surface (thickness: 40 µm).

### [Preparation of packaging material]

### (Example 1)

1 mol of 1,4-cyclohexane dimethanol was reacted with 2 mol of isophorone diisocyanate. 2 mol of 2-hydroxyethyl acrylate was reacted in 1 mol of the product of the above reaction to obtain a urethane acrylate oligomer. 5 mass% of 1-hydroxycyclohexyl phenyl ketone (product name: Irgacure 184, manufactured by BASF) in terms of solid content ratio was added to the obtained urethane acrylate oligomer to obtain an active energy ray-curable resin composition. The corrosion prevention treatment agent for use in ceria sol treatment was coated onto one surface of the metal foil to form a corrosion prevention treatment layer. The active energy ray-curable resin composition was coated onto a surface (first surface) of the metal foil, where the corrosion prevention treatment layer was not formed, by use of a bar coater, followed by heating and drying at 100°C for 5 minutes. The dry thickness of the coating film was 9 µm. Using a high pressure mercury lamp as a light source, UV rays were irradiated to the coating film so that the integrated light quantity was 1000 mJ/cm². Then, the coating film was cured to form a coating layer on the metal foil layer.

Next, the adhesive resin was coated onto the corrosion prevention treatment layer which was formed on a surface (second surface) of the metal foil opposite to the surface on which the coating layer was formed. Then, the corona treated surface of the sealant film was bonded to the coating surface, thereby forming a sealant layer on the corrosion prevention treatment layer via the adhesive layer. The obtained laminate was heated and compressed at 190°C to obtain the packaging material of Example 1. The configuration of the packaging material and the materials used in preparing the urethane acrylate oligomer are shown together in Table 1.

### (Example 2)

The corrosion prevention treatment agent for ceria sol treatment was coated on both surfaces (first and second surfaces) of the metal foil, and the respective first and second corrosion prevention treatment layers were formed. A coating layer was formed on the first corrosion prevention treatment layer, and a sealant layer was formed on the second corrosion prevention treatment layer via an adhesive layer. Except for the abovementioned steps, a packaging material of Example 2 was obtained in the same manner as Example 1. The configuration of the packaging material and the materials used in preparing the urethane acrylate oligomer are shown together in Table 1.

### (Example 3)

1 mol of hydrogenated bisphenol A was reacted with 2 mol of hydrogenated diphenylmethane diisocyanate. 1 mol of the product of the above reaction was reacted with 2 mol of 2-hydroxyethyl acrylate to obtain a urethane acrylate oligomer. 5 mass% of 1-hydroxycyclohexyl phenyl ketone (product name: Irgacure 184, manufactured by BASF) in terms of solid content ratio was added to the obtained urethane acrylate oligomer to obtain an active energy ray-curable resin composition. The corrosion prevention treatment agent for ceria sol treatment was coated on one surface of the metal foil to form the corrosion prevention treatment layer. An active energy ray-curable resin composition was coated on a surface (first surface) of the metal foil, where the corrosion prevention treatment layer was not formed, by use of a bar coater, followed by heating and drying at 100°C for 5 minutes. The dry thickness of the coating film was 9 µm. Using a high pressure mercury lamp as a light source, UV rays were irradiated so that the integrated light quantity was 1000 mJ/cm², and the coating film was cured to form a coating layer on the metal foil layer. Except for forming the coating layer as stated above, a packaging material of Example 3 was obtained in the same manner as Example 1. The configuration of the packaging material and the materials used in preparing the urethane acrylate oligomer are shown together in Table 1.

### (Example 4)

569 g of 1,4-cyclohexane dimethanolpolycarbonate diol (hydroxyl value: 284, molecular weight: 569) was reacted with 2 mol of isophorone diisocyanate. 1 mol of the product of the above reaction was reacted with 2 mol of 2-hydroxyethyl acrylate to obtain a urethane acrylate oligomer. The hydroxyl value of the urethane acrylate oligomer was 284. 5 mass% of 3-acryloxypropyltrimethoxysilane in terms of solid content ratio and 5 wt% of 1-hydroxycyclohexyl phenyl ketone (product name: Irgacure 184, manufactured by BASF) in terms of solid content ratio were added to the obtained urethane acrylate oligomer to obtain an active energy ray-curable resin composition. The corrosion prevention treatment agent for ceria sol treatment was coated on one surface of the metal foil to form a corrosion prevention treatment layer. The active energy ray-curable resin composition was coated on a surface (first surface) of the metal foil, where the corrosion prevention treatment layer was not formed, by use of a bar coater, followed by heating and drying at 100°C for 1 minute. The dry thickness of the coating film was 9 µm. Using a high pressure mercury lamp as a light source, UV rays were irradiated so that the integrated light quantity was 1000 mJ/cm², and the coating film was cured to form a coating layer on the metal foil layer. Except for forming the coating layer as stated above, a packaging material of Example 4 was obtained in the same manner as Example 1. The configuration of the packaging material and the materials used in preparing the urethane acrylate oligomer are shown together in Table 1.

### (Example 5)

A packaging material of Example 5 was obtained in the same manner as Example 1, except for using 2,6-decahydronaphthalene dimethanol in place of 1,4-cyclohexane dimethanol in obtaining a urethane acrylate oligomer. The configuration of the packaging material and the materials used in preparing the urethane acrylate oligomer are shown together in Table 1.

### (Example 6)

A reaction product obtained by reacting 1 mol of 1,4-cyclohexane dimethanol and 2 mol of isophorone diisocyanate was reacted with 1 mol of trimethylolpropane triacrylate and 1 mol of 2-hydroxyacrylate to obtain a urethane acrylate oligomer. 5 mass% of 1-hydroxycyclohexyl phenyl ketone (product name: Irgacure 184, manufactured by BASF) in terms of solid content ratio was added to the obtained urethane acrylate oligomer to obtain an active energy ray-curable resin composition. The corrosion prevention treatment agent for ceria sol treatment was coated on one surface of the metal foil to form a corrosion prevention treatment layer. The active energy ray-curable resin composition was coated on a surface (first surface) of the metal foil, where the corrosion prevention treatment layer was not formed, by use of a bar coater, followed by heating and drying at 100°C for 1 minute. The dry thickness of the coating film was 11 µm. Using a high pressure mercury lamp as a light source, UV rays were irradiated so that the integrated light quantity was 1000 mJ/cm², and the coating film was cured to form a coating layer on the metal foil layer. Except for forming the coating layer as stated above, a packaging material of Example 6 was obtained in the same manner as Example 1. The configuration of the packaging material and the materials used in preparing the urethane acrylate oligomer are shown together in Table 1.

### (Example 7)

A packaging material of Example 7 was obtained in the same manner as Example 6, except for using 2 mol of pentaerythritol triacrylate in place of 1 mol of trimethylolpropane triacrylate and 1 mol of 2-hydroxyacrylate in obtaining a urethane acrylate oligomer. The configuration of the packaging material and the materials used in preparing the urethane acrylate oligomer are shown together in Table 1.

### (Comparative example 1)

A packaging material of Comparative example 1 was obtained in the same manner as Example 1, except for using tetramethylene glycol in place of 1,4-cyclohexane dimethanol in obtaining a urethane acrylate oligomer. The configuration of the packaging material and the materials used in preparing the urethane acrylate oligomer are shown together in Table 1.

### (Comparative example 2)

A packaging material of Comparative example 2 was obtained in the same manner as Example 1, except for using 1,6-hexamethylene glycol in place of 1,4-cyclohexane dimethanol in obtaining the urethane acrylate oligomer. The configuration of the packaging material and the materials used in preparing the urethane acrylate oligomer are shown together in Table 1.

### (Comparative example 3)

A packaging material of Comparative example 3 was obtained in the same manner as Example 1, except for using 1000 g of polycaprolactone polyol (product name: PLACCEL 210, manufactured by Daicel Corporation, molecular weight: 1000, hydroxyl value: 112.7 KOHmg/g) in place of 1 mol of 1,4-cyclohexane dimethanol in obtaining a urethane acrylate oligomer. The configuration of the packaging material and the materials used in preparing the urethane acrylate oligomer are shown together in Table 1.

### (Comparative example 4)

A reaction product obtained by reacting 1 mol of polytetramethylene adipate glycol and 2 mol of hydrogenated diphenylmethane diisocyanate was reacted with 2 mol of 2-hydroxyethyl acrylate to obtain a urethane acrylate oligomer. 5 mass% of 1-hydroxycyclohexyl phenyl ketone (product name: Irgacure 184, manufactured by BASF) in terms of solid content ratio was added to the obtained urethane acrylate oligomer to obtain an active energy ray-curable resin composition. The corrosion prevention treatment agent for ceria sol treatment was coated on one surface of the metal foil to form a corrosion prevention treatment layer. The active energy ray-curable resin composition was coated on a surface (first surface) of the metal foil, where the corrosion prevention treatment layer was not formed, by use of a bar coater, followed by heating and drying at 100°C for 5 minutes. The dry thickness of the coating film was 12 µm. Using a high pressure mercury lamp as a light source, UV rays were irradiated so that the integrated light quantity was 1000 mJ/cm², and the coating film was cured to form a coating layer on the metal foil layer. Except for forming the coating layer as stated above, a packaging material of Comparative example 4 was obtained in the same manner as Example 1. The configuration of the packaging material and the materials used in preparing the urethane acrylate oligomer are shown together in Table 1.

### (Comparative example 5)

A packaging material of Comparative example 5 was obtained in the same manner as Example 7, except for using bis-phenol A in place of 1,4-cyclohexane dimethanol and using hexamethylene diisocyanate in place of isophorone diisocyanate in obtaining a urethane acrylate oligome. The configuration of the packaging material and the materials used in preparing the urethane acrylate oligomer are shown together in Table 1.

### (Comparative example 6)

A packaging material of Comparative example 6 was obtained in the same manner as Comparative example 5, except for using 2 mol of dipentaerythritol pentaacrylate in place of 2 mol of pentaerythritol triacrylate in obtaining a urethane acrylate oligomer. The configuration of the packaging material and the materials used in preparing the urethane acrylate oligomer are shown together in Table 1.

### (Comparative example 7)

The corrosion prevention treatment agent for ceria sol treatment was coated on both surfaces of the metal foil to form the first and second corrosion prevention treatment layers. A biaxially stretched polyamide film (thickness: 15 µm) was bonded as a base layer onto the first corrosion prevention treatment layer via an adhesive layer by use of a dry lamination method which used a two-liquid mixed adhesive of polyesterpolyol and polyisocyanate. Except for obtaining a laminate including the second corrosion prevention treatment layer, the metal foil layer, the first corrosion prevention treatment layer, the adhesive layer and the base layer in this order as stated above, a packaging material of Comparative example 7 was obtained in the same manner as Example 1. The configuration of the packaging material and the materials used for the base layer are shown together in Table 1.

### (Comparative example 8)

A packaging material of Comparative example 8 was obtained in the same manner as Comparative example 7, except for bonding a biaxially stretched polyester film (thickness: 12 µm) as the base layer onto the first corrosion prevention treatment layer. The configuration of the packaging material and the materials used for the base layer are shown together in Table 1.

### [Evaluation of packaging material]

### (Electrolytic resistance)

The electrolytic solution (solvent: ethylene carbonate / dimethyl carbonate / diethyl carbonate = 1/1/1, electrolyte: LiPF₆ (concentration: 1M)) to which a small amount of water (1500 ppm) was added was added dropwise to the coating layer (or base layer) side surface of the packaging material obtained in the examples and the comparative examples. After being left standing for 24 hours, the electrolyte was wiped away with isopropyl alcohol. Then, the appearance of the drop applied portions of each packaging material was evaluated according to the following criteria. The evaluation results are shown in Table 2.
"A": The portion where the electrolytic solution had been added dropwise was not visually recognizable.
"B": An outline in the portion where the electrolytic solution had been added dropwise was visually recognizable, but did not receive damage such as dissolution.
"C": The portion where the electrolytic solution had been added dropwise received damage such as dissolution due to the electrolytic solution.

### (Insulating properties)

The laminate of the metal foil layer and the coating layer (or, the laminate of the metal foil layer, the first corrosion prevention treatment layer and the coating layer) obtained in preparing the packaging material in each of the examples and the comparative examples was cut to a 50 mm x 50 mm blank form, and immersed in water. The laminate was taken out after 24 hours of immersion. Metal terminals were contacted to the blank form metal foil layer side and the coating layer side, the coating layer being formed on the first surface, of the metal foil layer in a 23°C environment, and electric resistance at the time of applying a voltage of 25V was measured. Then, insulating properties of the laminate were evaluated according to the following criteria. The evaluation results are shown in Table 2.
"A": An electrical resistance of 25 GΩ or more was maintained with the application of the voltage for 3 minutes.
"B": The electrical resistance decreased to less than 25 GΩ within 3 minutes after application of the voltage.
"C": The electrical resistance decreased to less than 25 GΩ within 3 seconds after application of the voltage.

### (Formability)

Each of the packaging materials obtained in the examples and the comparative examples was cut to a 150 mm x 190 mm blank form, and cold-formed while changing the forming depth under an environment of 23°C room temperature and -35°C dew point temperature. In forming the packaging material, a punching die was used. The punching die had a shape of 100 mm x 150 mm in a surface parallel to the packaging material, and had a punch corner radius (Rcp) of 1.5 mm and a punch shoulder radius (Rp) of 0.75 mm. Another die was used which had a die shoulder radius (Rd) of 0.75 mm. The formability was evaluated according to the following criteria. The evaluation results are shown in Table 2.
"A": Deep drawing to a forming depth of 4 mm or more was possible without causing breakage or cracking.
"B": Deep drawing to a forming depth of 3 mm or more and less than 4 mm was possible without causing breakage or cracking.
"C": Breakage or cracking was caused by deep drawing to a forming depth of less than 3 mm.

**[Table 1]**

| | First corrosion prevention treatment layer | First surface side adhesive layer of the metal foil | Coating layer | | | |
|---|---|---|---|---|---|---|
| | | | Polyol | Polyisocyanate | (Meth)acrylate | Number of (meth)-acryloyl groups |
| Ex. 1 | None | None | 1,4-cyclohexane dimethanol | Isophorone diisocyanate | 2-hydroxyethyl acrylate | 2 |
| Ex. 2 | Present | None | 1,4-cyclohexane dimethanol | Isophorone diisocyanate | 2-hydroxyethyl acrylate | 2 |
| Ex. 3 | None | None | Hydrogenated bisphenol A | Hydrogenated diphenylmethane diisocyanate | 2-hydroxyethyl acrylate | 2 |
| Ex. 4 | None | None | Polycarbonate diol of 1,4-cyclohexane dimethanol | Isophorone diisocyanate | 2-hydroxyethyl acrylate | 2 |
| Ex. 5 | None | None | 2,6-decahydronaphthalene dimethanol | Isophorone diisocyanate | 2-hydroxyethyl acrylate | 2 |
| Ex. 6 | None | None | 1,4-cyclohexane dimethanol | Isophorone diisocyanate | Trimethylolpropane triacrylate+ 2-hydroxy-acrylate | 4 |
| Ex. 7 | None | None | 1,4-cyclohexane dimethanol | Isophorone diisocyanate | Pentaerythritol triacrylate | 6 |
| Comp. ex. 1 | None | None | Tetramethylene glycol | Isophorone diisocyanate | 2-hydroxyethyl acrylate | 2 |
| Comp. ex. 2 | None | None | 1,6-hexanediol | Isophorone diisocyanate | 2-hydroxyethyl acrylate | 2 |
| Comp. ex. 3 | None | None | Polycaprolactone polyol | isophorone diisocyanate | 2-hydroxyethyl acrylate | 2 |
| Comp. *ex*. 4 | None | None | Polytetramethylene adipate glycol | Hydrogenated diphenylmethane diisocyanate | 2-hydroxyethyl acrylate | 2 |
| Comp. ex. 5 | None | None | Bis-phenol A | Hexamethylene diisocyanate | Pentaerythritol triacrylate | 6 |
| Comp. ex. 6 | None | None | Bis-phenol A | Hexamethylene diisocyanate | Dipentaerythritol pentaacrylate | 10 |
| | First corrosion prevention treatment layer | First surface side adhesive layer of the metal foil | Base layer | | | |
| Comp. ex. 7 | Present | Present | Biaxially stretched polyamide film | | | |
| Comp. ex. 8 | Present | Present | Biaxially stretched polyester film | | | |

**[Table 2]**

| | Electrolytic resistance | Insulating property | Formability |
|---|---|---|---|
| Example 1 | A | A | A |
| Example 2 | A | A | A |
| Example 3 | A | A | B |
| Example 4 | A | A | A |
| Example 5 | A | A | B |
| Example 6 | B | A | A |
| Example 7 | A | A | B |
| Comp. ex. 1 | B | B | B |
| Comp. ex. 2 | C | B | B |
| Comp. ex. 3 | B | B | C |
| Comp. ex. 4 | A | B | A |
| Comp. ex. 5 | A | B | B |
| Comp. ex. 6 | C | C | B |
| Comp. ex. 7 | C | B | A |
| Comp. ex. 8 | A | A | C |

As shown in Tables 1 and 2, it was found that good electrolytic resistance, insulating properties and formability was obtained by the packaging materials of the examples which used urethane (meth)acrylate obtained using a polyol having an alicyclic structure.

On the one hand, satisfactory insulating properties could not be obtained by Comparative examples 1 to 6 which used polyols with no alicyclic structure in preparing urethane (meth)acrylate. Further, in Comparative example 2 which used 1,6-hexanediol with a comparatively long chain structure, distance was increased in the alicyclic structure of the coating layer, and thus the electrolytic resistance decreased. In Comparative example 7 which used a polyamide film as a base layer without using a coating layer, the electrolytic resistance decreased and the insulating properties decreased. Moreover, in Comparative example 8 which used a polyester film as a base layer without using a coating layer, formability decreased. Example 3 which used hydrogenated bisphenol A and hydrogenated diphenylmethane diisocyanate obtained sufficient formability. However, the formability was lower compared to Examples 1, 2 and 4. This is considered to be because the rigidity of hydrogenated bisphenol A and hydrogenated diphenylmethane diisocyanate was slightly high, and flexibility was somewhat impaired.

From the above, it was found that high insulating properties were ensured by the packaging materials which were obtained by use of urethane (meth)acrylate, as a coating layer, which was obtained by using a polyol having an alicyclic structure.

### [Reference Signs List]

10,20...packaging material (packaging material for a power storage device), 11...coating layer, 12...metal foil layer, 13...corrosion prevention treatment layer, 14...adhesive layer, 15...sealant layer, 21...coating layer, 22...first corrosion prevention treatment layer, 23...metal foil layer, 24...second corrosion prevention treatment layer, 25...adhesive layer, 26...sealant layer.

## Claims

1. A packaging material for a power storage device comprising:
a metal foil layer;
a coating layer directly formed on a first surface of the metal foil layer or with a first corrosion prevention treatment layer interposed therebetween;
a second corrosion prevention treatment layer formed on a second surface of the metal foil layer;
an adhesive layer formed on the second corrosion prevention treatment layer; and
a sealant layer formed on the adhesive layer, wherein:
the coating layer is formed from an active energy ray-curable resin composition containing a urethane (meth)acrylate, or from an aqueous polyurethane dispersion; and
the urethane (meth)acrylate is obtained through reaction between a polyol having an alicyclic structure, polyisocyanate, and a hydroxyl group-containing (meth)acrylate.

2. The packaging material for a power storage device according to claim 1, wherein the urethane (meth)acrylate has 2 to 6 (meth)acryloyl groups.

3. The packaging material for a power storage device according to claim 1 or 2, wherein the coating layer has a thickness of 3 to 30 µm.

4. The packaging material for a power storage device according to any one of claims 1 to 3, wherein the polyol having an alicyclic structure contains a polycarbonate diol having an alicyclic structure.

5. The packaging material for a power storage device according to claim 4, wherein the polycarbonate diol having an alicyclic structure has a structure derived from at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol, and 1,4-cyclohexanediol.

6. The packaging material for a power storage device according to any one of claims 1 to 5, wherein the polyol having an alicyclic structure contains at least one compound selected from a group consisting of bicyclo [4,4,0] decane dimethanol, norbornane dimethanol, tricyclodecane dimethanol, 2,6-decahydronaphthalene dimethanol, hydrogenated bisphenol A, 1,4-cyclohexane dimethanol, and 1,4-cyclohexanediol.
